# EUROPÄISCHE PATENTSCHRIFT

(11) **EP 3 719 233 B1**
(45) Veröffentlichungstag und Bekanntmachung des Hinweises auf die Patenterteilung: **10.08.2022**
(21) Anmeldenummer: 20167920.6
(22) Anmeldetag: 03.04.2020
(51) Int. Cl.: E04G 5/08, B32B 3/12, B32B 5/18, B32B 3/06, B32B 27/06, B32B 27/08, B32B 27/20, B32B 27/32

(54) **LEICHTBAU-GERÜSTBOHLE**
LIGHTWEIGHT SCAFFOLD PLANK
MADRIER D'ÉCHAFAUDAGE LÉGER

(30) Priorität: 04.04.2019 DE 102019108889
(43) Veröffentlichungstag der Anmeldung: 07.10.2020
(73) Patentinhaber: ALTRAD plettac assco GmbH, 58840 Plettenberg (DE)
(72) Erfinder: Deitenberg, Ralf Peter, 57413 Finnentrop (DE); Lawory, Ulrich, 58675 Hemer (DE)
(74) Vertreter: Otten, Roth, Dobler & Partner mbB Patentanwälte

(56) Entgegenhaltungen:
- WO-A1-99/11885
- WO-A1-2018/139674
- CN-A- 108 265 962
- DE-U1- 20 011 747
- KR-A- 20170 124 229

## Beschreibung

Die Erfindung betrifft eine Gerüstbohle für ein Baugerüst oder eine entsprechende Anwendung auf einer mobilen Plattform, wobei die Gerüstbohle als Leichtbau Gerüstbohle ausgebildet ist.

Im Gerüstbau spielt einerseits die geforderte Tragfähigkeit, andererseits die im Alltag ebenso beanspruchte Robustheit eine erhebliche Rolle. Die Montage von Baugerüsten oder ähnlichen Anwendungen erfolgt in der Regel manuell oder zumindest teilmanuell, wobei die finale Anordnung und Sicherung vom Gerüstwerker stets von Hand erfolgt. Dabei muss der Gerüstwerker das Gewicht der einzelnen Bestandteile tragen und diese an die dafür vorgesehene Position bringen. In diesem Zusammenhang haben sich Leichtbaumaterialen wie z.B. Aluminium oder dergleichen sowie besonders stabile, jedoch aber leichte Profilkonstruktionen etabliert.

Aufgabe der Erfindung ist es, die Belastung der einzelnen Gerüstwerker beim Aufbau eines Gerüsts weiter zu verringern. Diese Aufgabe wird ausgehend von bekannten Gerüstbohlen durch die weitere Reduktion des Gewichts bei gleichbleibender oder zunehmender Stabilität und Robustheit gelöst. DE 200 11 747 U1 offenbart eine Gerüstbohle, umfassend einen Laufboden sowie mindestens zwei Kopfbeschläge, wobei der Laufboden als Mehrschicht-Lagensystem aus mindestens drei Lagen aufgebaut ist, bestehend aus einem wabenförmigen Kern, dadurch gekennzeichnet, dass der Wabenkern aus thermoplastischem Material besteht und mit beidseitigen Tragschichten aus Faserverbundwerkstoffen, die Glasfaser oder Kohlenstofffasern umfassen, die in eine Polymermatrix eingebunden sind, fest verbunden ist. WO 2018/139674 A1 offenbart eine Gerüstbohle, umfassend einen Laufboden sowie mindestens zwei Kopfbeschläge, wobei der Laufboden die Kopfbeschläge stirnseitig aufnimmt wobei der Laufboden als Mehrschicht-Lagensystem aus mindestens drei Lagen aufgebaut ist, der Laufboden eine Leichtbau-Kernlage aus einem Schaumstoff sowie einen Obergurt als Decklage an einer Oberseite der Kernlage und einen Untergurt als Decklage unterhalb der Kernlage umfasst. WO 99/11885 A1 offenbart eine Gerüstbohle vergleichbar mit der der oben genannten Dokumente, wobei in einer wabenförmigen Kernlage die Hohlräume mit einem Kunststoff ausgeschäumt werden.

Die Erfindung betrifft eine Gerüstbohle (Gerüstboden) umfassend, einen Laufboden sowie mindestens zwei Kopfbeschläge, wobei der Laufboden die Kopfbeschläge stirnseitig aufnimmt und wobei der Laufboden als Mehrschicht-Lagensystem aus mindestens drei Lagen aufgebaut ist, wobei der Laufboden eine Leichtbau-Kernlage, insbesondere aus einem thermoplastischen oder duroplastischen Wabenmaterial oder einem Schaumstoff sowie einen Obergurt als Decklage an einer Oberseite der Kernlage und einen Untergurt als Decklage an einer Unterseite der Kernlage umfasst. Die Erfindung ist dadurch gekennzeichnet, dass der Obergurt einen UV-Sensor umfasst.

Der Aufbau einer Gerüstbohle als Mehrschicht- bzw. Sandwichsystem erlaubt den Einsatz von Leichtbaumaterialien, insbesondere Wabenkernen oder Hartschaumkernen. Durch einen stabilisierenden Obergurt sowie einen stabilisierenden Untergurt können die bei Belastung auftretenden Zug-, Druck- und Torsionskräfte aufgenommen und an die Kopfbeschläge übergeben werden. Dies erfolgt durch Abstimmung des zug- und/oder drucksteifen, und gegenüber der Kernlage erheblich dünner ausgeführten Obergurt und Untergurt. Auf diese Weise wird eine sehr leichte, jedoch extrem stabile und robuste Gerüstbohle erhalten.

Die Einbringung von Sensoren, lassen die Erfassung von Belastungszuständen und Alterungszuständen der Gerüstbohle zu, so dass eine Reaktion durch den Eigentümer oder den Hersteller erfolgen kann, bevor Defekte auftreten oder die Gerüstbohle insgesamt ausgetauscht werden muss.

Eine Weiterbildung sieht vor, dass die Kopfbeschläge aus Kunststoff, bevorzugt aus faserverstärktem Kunststoff bestehen, insbesondere als Kunststoff-Spritzgussteil und/oder durch additive Fertigungstechnologien, beispielsweise durch Vorfertigung einzelner Baugruppen, welche sodann kombiniert und z.B. umspritzt werden, ausgebildet sind.

Die Ausbildung als Kunststoffteil spart überdies Gewicht und lässt eine einfache und kostengünstige Fertigung, insbesondere als Spritzgussteil für die verschiedenen zur Verfügung stehenden Systeme zu.

Bevorzugt werden dabei die Kopfbeschläge, welche als Systemauflager ausgebildet sind, insbesondere mit metallischen Einlagen als Lasteinleitungselemente ausgestattet, diese wiederum können metallische Hülsen umfassen, die auf entsprechende Zapfen an den Vertikalständern oder Rahmen eines Gerüsts aufsteckbar sind.

Insbesondere im Fertigungsprozess beim Spritzguss lassen sich diese Lastleitungselemente optimal integrieren, indem Sie dauerhaft mit Kunststoff umspritzt werden.

Eine zweckmäßige Ergänzung sieht überdies vor, dass mindestens ein Kopfbeschlag mindestens eine elektronische Bauteilerkennungsvorrichtung, z.B. NFC oder RFID Markierung umfasst, wobei die elektronische Bauteilerkennungsvorrichtung bevorzugt im Material des Kopfbeschlags aufgenommen, insbesondere umgossen bzw. umspritzt ist.

Durch ein entsprechendes RFID oder NFC Element kann die Gerüstbohle eindeutig identifiziert, einem System oder gar einem Eigentümer zugeordnet werden und es können zusätzlich Daten wie z.B. Einsatzstunden auf der Baustelle, UV Belastung oder sonstige Sensordaten (Stoß usw.) erfasst, gelesen oder geschrieben werden.

Eine vorteilhafte Ausführungsform sieht vor, dass die Gerüstbohle in Längsrichtung an beiden Längsseiten je mindestens ein metallisches oder kunststoffbasiertes Strukturelement, insbesondere ein Strukturprofil umfasst.

Die seitliche Fassung durch ein metallisches oder kunststoffbasiertes Strukturelement bringt überdies erhöhte Stabilität bei vergleichsweise geringem Zusatzgewicht und schützt die Seitenwangen der Längsseiten des Leichtbaubelags vor Beschädigung, und trägt zu einem duktileren Bauteilversagen im Sonderfall der Überlastung bei.

Das metallische Strukturelement kann dabei z.B. aus Aluminium oder einem anderen geeigneten Leichtmetall hergestellt sein.

Alternativ kann das kunststoffbasierte Strukturelement auch aus einem duktilen Kunststoff bzw. Kunststoff-Verbundwerkstoff ausgebildet werden, um durch gewisse Schlagzähe und Elastizität die Gerüstbohle zu stabilisieren und zu schützen.

In einer besonderen Ausführungsform kann die Gerüstbohle sodann in Längsrichtung an mindestens einer, bevorzugt beiden Längsseiten einen Linien- und/oder Flächendehnungssensor umfassen, um Sensorwerte über die Belastung der Gerüstbohle und das mögliche Risiko von Beschädigungen aufzunehmen.

Eine vorteilhafte Weiterbildung des Gerüstbodens sieht vor, dass der Obergurt und/oder der Untergurt selbst als Mehrschichtsystem ausgebildet ist und bevorzugt mindestens eine Schicht einen Faserverbundstoff, insbesondere eine unidirektionale Kohlenstofffaser-Polypropylen (CF-PP) umfasst.

Der Obergurt und/oder der Untergurt stellen die Komponenten der Gerüstbohle dar, welche die Zug-Dehnungskräfte bzw. Schub-DruckSpannungen aufnehmen müssen. Im flächigen Verbund mit der gegenüber dem Obergurt bzw. Untergurt erheblich dicker ausgebildeten Kernlage kann durch ein Mehrschichtlaminat als Obergurt bzw. Untergurt, welches insbesondere flächig mit der Kernlage verklebt ist, die benötigte Biegesteifigkeit für eine Gerüstbohle verbessert werden.

Besonders bevorzugt ist vorgesehen, dass der Obergurt und/oder der Untergurt eine stabilisierende Schutzschicht, insbesondere mehrere Lagen von thermoplastischem oder duroplastischem faserverstärkten Kunststoff, insbesondere Kohlenstofffasern und/oder Glasfasern, bevorzugt in Form von unidirektionalem Gelege und/oder multidirektionalem Gewebe oder Gelege umfasst.

Die auf diese Weise ausgebildete Schicht, insbesondere unter Einsatz von wiederum multidirektionalem Gewebe oder gekreuztem unidirektionalem Gelege bildet neben der geforderten Belastbarkeit und Stabilität auch einen erhöhten Schutz der Oberfläche aus, so dass diese extrem Widerstandsfähig gegen z.B. herunterfallende Gegenstände (Zimmermannshammer oder Baumaterialien) und sonstige Belastungen (Nägel, Schrauben usw.) ausgebildet ist. Im flächigen Verbund mit der gegenüber dem Obergurt bzw. Untergurt erheblich dicker ausgebildeten Kernlage kann durch dieses Mehrschichtsystem als Obergurt bzw. Untergurt, welches insbesondere flächig mit der Kernlage verklebt ist, die benötigte Biegesteifigkeit für eine Gerüstbohle verbessert werden.

Eine vorteilhafte Weiterbildung sieht vor, dass der Obergurt und/oder der Untergurt eine Oberflächenschutzschicht umfasst, wobei die Oberflächenschutzschicht vorzugsweise als äußerste Schicht und insbesondere als Mehrlagen-Schicht ausgebildet ist und insbesondere eine thermoplastische UV-Schutzfolie und/oder eine elastomere Dämpfungsschicht und/oder eine raue Strukturschicht umfasst.

Eine entsprechende Schutzschicht kann die Haltbarkeit der Gerüstbohle erheblich verbessern, da die UV Belastung für Kunststoffbauteile eine erheblich höhere Alterung verursachen kann, als z.B. bei Metallbelägen.

Durch den Einsatz einer Dämpfungsschicht und/oder einer rauen Strukturschicht wird die Trittsicherheit und die Belastbarkeit sowie der Schutz vor Beschädigungen nochmals verbessert, da die Trittfläche des Laufbodens für den Nutzer optimiert ist.

In einer zweckmäßigen Weiterbildung können der Obergurt und/oder der Untergurt in Längsrichtung abschnittsweise oder durchgehend mindestens einen Linien- und/oder Flächendehnungssensor und/oder mindestens einen UV-Sensor umfassen.

Die Einbringung von Sensoren, insbesondere mit dem Vorhandensein von entsprechenden Speicher- und Lese-/Schreibmitteln wie z.B. NFC oder RFID Schnittstellen, lassen die Erfassung von Belastungszuständen und Alterungszuständen der Gerüstbohle zu, so dass eine Reaktion durch den Eigentümer oder den Hersteller erfolgen kann, bevor Defekte auftreten oder die Gerüstbohle insgesamt ausgetauscht werden muss.

Die Erfindung soll im Folgenden näher durch das dargestellte Ausführungsbeispiel beschrieben werden. Die Erfindung ist dabei jedoch nicht auf die dargestellte Ausführungsform, insbesondere im Umfang der Dimensionierung und/oder der Systemauflager beschränkt.

Es zeigen
- Fig. 1: eine schematische perspektivische Darstellung einer Gerüstbohle;
- Fig.2: eine vergrößerte Darstellung im Bereich eines Kopfbeschlags;
- Fig. 3: eine Schnittdarstellung durch das Mehrschicht-Lagensystem der Gerüstbohle.

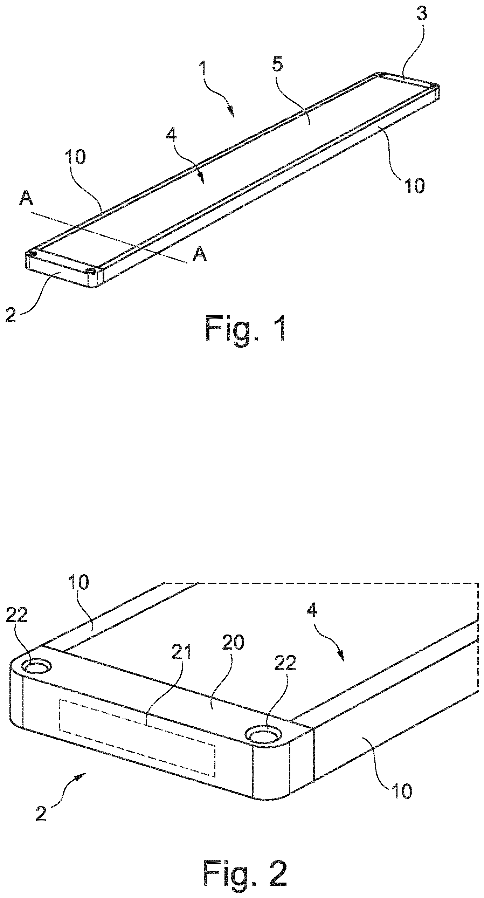

Im Einzelnen zeigt Fig. 1 eine Gerüstbohle 1, welche an den Stirnseiten einen Kopfbeschlag 2 und 3 umfasst. Zwischen den Kopfbeschlägen 2 und 3 ist der Laufboden 4 der Gerüstbohle 1 angeordnet. Die sichtbare Oberseite des Laufbodens 4 bildet ein Obergurt 5, die Unterseite ein Untergurt 6 (vorliegend nicht dargestellt).

Die Gerüstbohle umfasst an beiden Längsseiten je ein vorzugsweise metallisches oder kunststoffbasiertes Strukturelement 10, welches in Form eines C-Profils ausgebildet ist. Auch z.B. ein T-Profil wäre möglich.

Das Strukturelement kann als Aluminiumprofil ausgebildet werden und schützt die Gerüstbohle seitlich vor Beschädigungen des Laufbodens.

Alternativ kann das Strukturelement auch aus einem duktilen Kunststoff bzw. Kunststoff-Verbundwerkstoff ausgebildet werden, um durch gewisse Schlagzähe und Elastizität die Gerüstbohle zu stabilisieren und zu schützen.

In Fig. 2 ist eine vergrößerte Darstellung des Kopfbeschlags 2 am Laufboden 4 dargestellt. Der Kopfbeschlag 2 ist dabei teilweise stilisiert dargestellt, um eine Beschreibung innenliegender Bestandteile zu ermöglichen.

Der Kopfbeschlag 2 ist als Kunststoff-Bauteil, bevorzugt im Spritzgussverfahren hergestellt. Dabei können auch mehrere Komponenten nacheinander gefertigt werden, so dass Bestandteile eingelegt und zur Fertigstellung umspritzt werden können. Vorliegend ist ein Basisteil 20 vorgesehen (massiv dargestellt), welches einen Bauteilerkennungssensor 21, z.B. einen RFID oder NFC Sensor im Inneren aufnimmt. Der Sensor kann dabei ein reiner Lese- oder auch ein Lese-/Schreib-Sensor sein, welcher insbesondere auch Daten anderer Sensoren erfassen und speichern kann.

Am Basisteil 20 sind des Weiteren auch Aufnahmen für Lasteinleitungselemente 22, vorliegend für Hülsen zum Aufstecken auf Zapfen an Vertikalrahmen oder Vertikalstielen von Gerüsten, vorgesehen. Auch andere Arten von Lasteinleitungselementen, z.B. Krallen oder dergleichen sind denkbar.

Die Elemente des Basisteils 20, der Sensoren 21 und/oder der Lasteinleitungselemente 22 werden bevorzugt insgesamt durch einen Kunststoff bei der Fertigung gespritzt und somit vollständig integriert, so dass sie nicht zerstörungsfrei voneinander getrennt werden können.

Auch die komplette Fertigung des Kopfbeschlags 2 in einem Spritzgussvorgang ist denkbar, soweit die zu integrierenden Bestandteile, insbesondere die Lasteinleitungselemente in der Form bzw. am Laufboden 4 positioniert und gehalten werden. Diese Variante bietet sich insbesondere bei Ausführungsformen ohne Sensorkomponenten an.

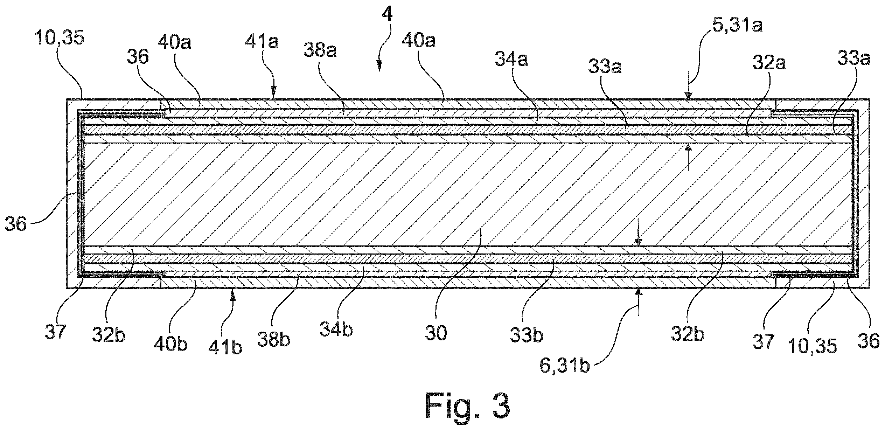

Fig. 3 zeigt einen Schnitt durch die erfindungsgemäße Gerüstbohle 1 entlang der in Fig. 1 dargestellten Linie A-A.

Der erfindungsgemäße Laufboden 4 umfasst vorliegend einen Wabenkern 30 als Kernlage sowie ein Mehrschichtsystem 31a (Oberseite) als Obergurt 5 und ein Mehrschichtsystem 31b (Unterseite) als Untergurt 6.

Der Wabenkern 30 ist als Kernlage aus PP hergestellt und stellt bei vergleichsweise geringem Gewicht ein hohes Volumen und eine hohe Druckstabilität in Wabenrichtung zur Verfügung.

An der oberseitigen und unterseitigen Oberfläche des Wabenkerns 30 ist eine erste Lage einer stabilisierenden Deckschicht 32a (Oberseite) und 32b (Unterseite) flächig mit dem Wabenkern 30 verbunden. Die Deckschichten 32a und 32b sind vorliegend als Kohlenstofffaser (CF-PP) in unidirektionaler Ausrichtung als Decklage ausgebildet.

Auf die Deckschicht 32a bzw. 32b ist eine Schutzschicht 33a (Oberseite) sowie 33b (Unterseite) aufgebracht, welche vorliegend als Glasfasergewebe oder Gelege oder Kohlefaservlies ausgebildet ist. Diese Schutzschicht dient zur Aufnahme von Schlägen oder Punktbeanspruchungen und verhindert eine Rissbildung in der stabilisierenden Deckschicht. Sie kann vorliegend auch in sich wiederum mehrlagig, insbesondere auch multidirektional ausgebildet sein. Bevorzugt umfasst diese Schicht 33a bzw. 33b noch eine elastomere Folie, welche überdies einer Rissbildung entgegen wirkt.

Des Weiteren umfasst der Obergurt 5 bzw. der Untergurt 6 au der Schutzschicht aufliegend wiederum eine weitere Deckschicht 34a (Oberseite) sowie 34b (Unterseite). Diese kann bevorzugt wiederum aus Kohlenstofffaser bestehen (CF-PP) und dient der weiteren Stabilisierung.

Das Verbundsystem aus Wabenkern 30 sowie der Schichten 32, 33, 34 (jeweils "a" auf Oberseite und "b" auf Unterseite) wird insgesamt seitlich von den metallischen oder kunststoffbasierten Strukturelementen 10, welche vorliegend als C-Profile 35 ausgebildet sind, eingefasst.

Unter dem C-Profil 35 ist vorliegend exemplarisch ein Sensorstreifen 36, z.B. in Form eines Biegesensors 36 oder Zug-Dehnungssensor angeordnet. Dieser kann, muss aber nicht vorgesehen werden.

In jedem Fall ist das Strukturelement 10 in Form des C-Profils 35 mit dem Verbund aus Wabenkern 30 sowie der Schichten 32,33,34 strukturell unlösbar verklebt. Hierzu findet z.B. ein elastomerer Strukturkleber (Klebeschicht 37) Verwendung. Auch die Anwendung eines thermoplastischen Schweißverfahrens ist denkbar. Ein ggf. vorhandener Biegesensor wird entsprechend integriert und mit verklebt oder verschweißt.

Aufliegend auf der oberen Decklage 35a bzw. 34b ist in einer bevorzugten Ausführungsform ein flächen- oder linienförmiger Dehnungssensor, vorliegend als Sensorschicht 38a (Oberseite) bzw. 38b (Unterseite) vorgesehen. Diese Sensorschicht 38a bzw. 38b wird seitlich zwischen den Wangen der C-Profile 35 gefasst und untergreift diese nicht.

Die Sensorschicht 38a bzw. 38b erlaubt die Daten über die momentane Belastung bzw. die Gesamtbelastung der Gerüstbohle zu erfassen und ggf. zu Speichern bzw. an Sensorelemente 21 zu übergeben. Auch Daten über die UV Belastung können erfasst und gespeichert werden.

Auf der Sensorschicht 38a bzw. 38b oder, falls diese nicht vorhanden ist, auf der Deckschicht 34a bzw. 34b ist als Oberflächenschicht eine primäre Schutzschicht 40a (Oberseite) sowie 40b (Unterseite) ausgebildet.

Auch diese primäre Schutzschicht 40a bzw. 40b kann als Mehrschichtsystem ausgebildet sein. Bevorzugt umfasst diese primäre Schutzschicht 40a bzw. 40b eine thermoplastische UV-Schutzfolie, eine elastomere Dämpfungsschicht sowie eine oberflächliche raue Strukturschicht, um die Trittsicherheit für einen Gerüstwerker an der Oberfläche 41a (Oberseite) sowie 41b (Unterseite) bereit zu stellen.

In dem Fall, in welchem eine UV-Schutzschicht vorgesehen wird, um die darunterliegende Sandwichkonstruktion vor Beschädigungen durch UV Strahlen zu schützen, kann ein UV Sensor vorgesehen werden, um die Gesamtbelastung durch UV Strahlung und damit die Haltbarkeit der Gerüstbohle zu überwachen.

Alle Lagen des Mehrschichtsystems der erfindungsgemäße Gerüstbohle sind mindestens teilweise, bevorzugt flächig miteinander verklebt oder verschweißt, so dass das Mehrschichtsystem und die Kopfbeschläge sowie die seitlichen Strukturelemente einen Verbund bilden.

## Patentansprüche

1. Gerüstbohle umfassend, einen Laufboden sowie mindestens zwei Kopfbeschläge,
wobei der Laufboden die Kopfbeschläge stirnseitig aufnimmt wobei der Laufboden als Mehrschicht-Lagensystem aus mindestens drei Lagen aufgebaut ist, wobei der Laufboden eine Leichtbau-Kernlage, insbesondere aus einem thermoplastischen oder duroplastischen Wabenmaterial oder einem Schaumstoff sowie einen Obergurt als Decklage an einer Oberseite der Kernlage und einen Untergurt als Decklage unterhalb der Kernlage umfasst,
**dadurch gekennzeichnet, dass**
der Obergurt mindestens einen UV-Sensor umfasst.

2. Gerüstbohle nach Anspruch 1, **dadurch gekennzeichnet, dass** die Kopfbeschläge aus Kunststoff, bevorzugt aus faserverstärktem Kunststoff bestehen, insbesondere als Kunststoff-Spritzgussteil ausgebildet sind.

3. Gerüstbohle nach Anspruch 1 oder 2, **dadurch gekennzeichnet, dass** die Kopfbeschläge als Systemauflager ausgebildet sind und insbesondere metallische Einlagen als Lasteinleitungselemente, bevorzugt metallische Hülsen umfassen.

4. Gerüstbohle nach einem der vorangegangenen Ansprüche, **dadurch gekennzeichnet, dass** mindestens ein Kopfbeschlag mindestens eine elektronische Bauteilerkennungsvorrichtung, z.B. NFC oder RFID Markierung umfasst, wobei die elektronische Bauteilerkennungsvorrichtung bevorzugt im Material des Kopfbeschlags aufgenommen, insbesondere umgossen bzw. umspritzt ist ausgebildet.

5. Gerüstbohle nach einem der vorangegangenen Ansprüche, **dadurch gekennzeichnet, dass** die Gerüstbohle in Längsrichtung an beiden Längsseiten je mindestens ein metallisches oder kunststoffbasiertes Strukturelement, insbesondere ein Strukturprofil umfasst.

6. Gerüstbohle nach einem der vorangegangenen Ansprüche, **dadurch gekennzeichnet, dass** die Gerüstbohle in Längsrichtung an mindestens einer, bevorzug beiden Längsseiten einen Linien- und/oder Flächendehnungssensor umfasst.

7. Gerüstbohle nach einem der vorangegangenen Ansprüche, **dadurch gekennzeichnet, dass** der Obergurt und/oder der Untergurt als Mehrschichtsystem ausgebildet ist und bevorzugt mindestens eine Schicht einen Faserverbundstoff, insbesondere Kohlenstofffasern in Polypropylen Matrix (CF-PP) umfasst.

8. Gerüstbohle nach einem der vorangegangenen Ansprüche, **dadurch gekennzeichnet, dass** der Obergurt und/oder der Untergurt eine stabilisierende Schutzschicht, insbesondere mehrere Lagen von thermoplastischem oder duroplastischem faserverstärkten Kunststoff, insbesondere Kohlestofffasern und/oder Glasfasern, bevorzugt in Form von unidirektionalen Gelege und/oder multidirektionalem Gewebe oder Gelege umfasst.

9. Gerüstbohle nach einem der vorangegangenen Ansprüche, **dadurch gekennzeichnet, dass** der Obergurt und/oder der Untergurt eine Oberflächenschutzschicht umfasst, wobei die Oberflächenschutzschicht vorzugsweise als äußerste Schicht und insbesondere als Mehrlagen-Schicht ausgebildet ist und insbesondere eine thermoplastische UV-Schutzfolie und/oder eine elastomere Dämpfungsschicht und/oder eine raue Strukturschicht umfasst.

10. Gerüstbohle nach einem der vorangegangenen Ansprüche, **dadurch gekennzeichnet, dass** der Obergurt in Längsrichtung abschnittsweise oder durchgehend mindestens einen Linien- und/oder Flächendehnungssensor umfasst
und/oder
der Untergurt in Längsrichtung abschnittsweise oder durchgehend mindestens einen Linien- und/oder Flächendehnungssensor und/oder mindestens einen UV-Sensor umfasst.

11. Verfahren zur Herstellung einer Gerüstbohle nach einem der vorangegangenen Ansprüche, **dadurch gekennzeichnet, dass** der Laufboden im Mehrschicht-Laminierverfahren bzw. mittels automatisierter Fertigungsprozesse und/oder die Kopfstücke im Spritzgussverfahren hergestellt sind.

## Claims

1. Scaffold plank comprising a floor and at least two head fittings,
wherein the floor accommodates the head fittings on its end faces,
wherein the floor is constructed in the form of a multilayer ply system of at least three plies, wherein the floor comprises a lightweight core ply, in particular of a thermoplastic or thermosetting honeycomb material or a foam, and an upper chord as covering ply on an upper side of the core ply and a lower chord as covering ply under the core ply,
**characterized in that**
the upper chord comprises at least one UV sensor.

2. Scaffold plank according to Claim 1, **characterized in that** the head fittings consist of plastic, preferably fibre-reinforced plastic, in particular are in the form of plastics injection moulded parts.

3. Scaffold plank according to Claim 1 or 2, **characterized in that** the head fittings are in the form of system bearers and in particular comprise metallic inserts in the form of load introduction elements, preferably metallic sleeves.

4. Scaffold plank according to one of the preceding claims, **characterized in that** at least one head fitting comprises at least one electronic component identification device, e.g. NFC or RFID marking, wherein the electronic component identification device is preferably accommodated, in particular potted or encapsulated by injection moulding, in the material of the head fitting.

5. Scaffold plank according to one of the preceding claims, **characterized in that** the scaffold plank comprises at least one respective metallic or plastic-based structural element, in particular a structural profile, on both longitudinal sides in a longitudinal direction.

6. Scaffold plank according to one of the preceding claims, **characterized in that** the scaffold plank comprises a linear and/or areal strain sensor on at least one side, preferably on both longitudinal sides, in a longitudinal direction.

7. Scaffold plank according to one of the preceding claims, **characterized in that** the upper chord and/or the lower chord is in the form of a multi-ply system and preferably at least one layer comprises a fibre composite material, in particular carbon fibres in a polypropylene matrix (CF-PP).

8. Scaffold plank according to one of the preceding claims, **characterized in that** the upper chord and/or the lower chord comprises a stabilizing protective layer, in particular multiple plies of thermoplastic or thermosetting, fibre-reinforced plastic, in particular carbon fibres and/or glass fibres, preferably in the form of a unidirectional laid fabric and/or multidirectional woven fabric or laid fabric.

9. Scaffold plank according to one of the preceding claims, **characterized in that** the upper chord and/or the lower chord comprises a surface-protection layer, wherein the surface-protection layer is preferably in the form of an outermost layer and in particular a multi-ply layer and in particular comprises a thermoplastic UV protective film and/or an elastomer damping layer and/or a rough structural layer.

10. Scaffold plank according to one of the preceding claims, **characterized in that** the upper chord comprises at least one linear and/or areal strain sensor in certain portions or continuously in a longitudinal direction,
and/or
the lower chord comprises at least one linear and/or areal strain sensor and/or at least one UV sensor in certain portions or continuously in a longitudinal direction.

11. Method for producing a scaffold plank according to one of the preceding claims, **characterized in that** the floor is produced by a multilayer laminating method or by means of automated manufacturing processes and/or the head pieces are produced by an injection moulding method.

## Revendications

1. Madrier d'échafaudage comprenant un plancher et au moins deux ferrures de tête,
le plancher recevant les ferrures de tête du côté frontal, le plancher étant construit comme un système multicouche formé d'au moins trois couches, le plancher comprenant une couche centrale légère, en particulier en matériau en nid d'abeille thermoplastique ou thermodurcissable ou en matériau alvéolaire, ainsi qu'une semelle supérieure comme couche de recouvrement sur un côté supérieur de la couche centrale et une semelle inférieure comme couche de recouvrement au-dessous de la couche centrale,
**caractérisé en ce que**
la semelle supérieure comprend au moins un capteur d'UV.

2. Madrier d'échafaudage selon la revendication 1, **caractérisé en ce que** les ferrures de tête sont en matière synthétique, de préférence en matière synthétique renforcée de fibres, et en particulier sont conçues comme une pièce de matière synthétique moulée par injection.

3. Madrier d'échafaudage selon la revendication 1 ou 2, **caractérisé en ce que** les ferrures de tête sont conçues comme des supports de système et comprennent notamment des inserts métalliques comme éléments d'introduction de charge, de préférence des manchons métalliques.

4. Madrier d'échafaudage selon l'une des revendications précédentes, **caractérisé en ce qu'**au moins une ferrure de tête comprend au moins un dispositif de détection de composant électronique, par exemple un marquage NFC ou RFID, le dispositif de détection de composant électronique étant de préférence reçu dans le matériau de la ferrure de tête, notamment coulé ou moulé autour de celui-ci.

5. Madrier d'échafaudage selon l'une des revendications précédentes, **caractérisé en ce que** le madrier d'échafaudage comprend au moins un élément structurel métallique ou à base de matière synthétique, notamment un profilé structurel, des deux côtés longitudinaux dans la direction longitudinale.

6. Madrier d'échafaudage selon l'une des revendications précédentes, **caractérisé en ce que** le madrier d'échafaudage comprend un capteur de dilatation linéaire et/ou surfacique sur au moins un côté longitudinal, de préférence les deux côtés longitudinaux, dans la direction longitudinale.

7. Madrier d'échafaudage selon l'une des revendications précédentes, **caractérisé en ce que** la semelle supérieure et/ou la semelle inférieure est conçue sous la forme d'un système multicouche et de préférence au moins une couche comprend un composite fibreux, notamment des fibres de carbone dans une matrice de polypropylène (CF-PP).

8. Madrier d'échafaudage selon l'une des revendications précédentes, **caractérisé en ce que** la semelle supérieure et/ou la semelle inférieure comporte une couche de protection stabilisatrice, notamment plusieurs couches de matière synthétique thermoplastiques ou thermodurcissables renforcées de fibres, notamment de fibres de carbone et/ou de fibres de verre, de préférence sous la forme de canevas unidirectionnels et/ou de tissu ou canevas multidirectionnel.

9. Madrier d'échafaudage selon l'une des revendications précédentes, **caractérisé en ce que** la semelle supérieure et/ou la semelle inférieure comprend une couche de protection de surface, la couche de protection de surface étant de préférence conçue comme couche la plus externe et notamment comme couche multicouche et comprenant notamment un film de protection UV thermoplastique et/ou une couche d'amortissement élastomère et/ou une couche structurelle rugueuse.

10. Madrier d'échafaudage selon l'une des revendications précédentes, **caractérisé en ce que** la semelle supérieure comprend au moins un capteur de dilatation linéaire et/ou surfacique par portions ou en continu dans la direction longitudinale,
et/ou
la semelle inférieure comprend au moins un capteur de dilation linéaire et/ou surfacique et/ou au moins un capteur d'UV par portions ou en continu dans la direction longitudinale.

11. Procédé de fabrication d'un madrier d'échafaudage selon l'une des revendications précédentes, **caractérisé en ce que** le plancher est réalisé dans le procédé de laminage multicouche ou au moyen de processus de fabrication automatisés et/ou les pièces de tête sont réalisées dans un procédé de moulage par injection.
